# EUROPEAN PATENT APPLICATION

(11) **EP 4 826 105 A1**
(43) Date of publication of application: **21.10.2026**
(21) Application number: 24904095.7
(22) Date of filing: 28.11.2024
(51) Int. Cl.: C23C 2/02, C23C 8/24, C23C 2/06, C23C 2/12, C23C 28/00, C23C 30/00, F16B 37/00

(54) **COATED FASTENER AND MANUFACTURING METHOD FOR SAME**

(30) Priority: 14.12.2023 KR 20230182484
(71) Applicant: POSCO Co., Ltd, Pohang-si, Gyeongsangbuk-do 37859 (KR)
(72) Inventor: LEE, Kyung-Hwang, Incheon 21985 (KR); YANG, Ji-Hoon, Incheon 21985 (KR); RHEE, Ki-Ho, Incheon 21985 (KR); PARK, Sung-Soo, Incheon 21985 (KR)
(74) Representative: Meissner Bolte Partnerschaft mbB
(86) International application number: PCT/KR2024/019103
(87) International publication number: WO 2025/127530

(57) **Abstract**

One aspect of the present invention is to provide a fastener in which the surface hardness and corrosion resistance of a material have been improved through a thermal surface treatment layer, and a manufacturing method for same. Another aspect of the present invention is to provide a coated fastener having improved mechanical properties, such as excellent impact resistance and fatigue resistance, and high corrosion resistance due to the presence of a zinc-aluminum inorganic coating layer, and a manufacturing method for same.

## Description

### Technical Field

The present disclosure relates to a coated fastener and a method for manufacturing the same.

### Background Art

In order to suppress global warming, industries related to renewable energy generation are developing as a portion of efforts for reducing an amount of carbon, designated as a greenhouse gas. In solar power generation, due to environmental destruction issues, as a solar power plant installed on land moves environments, such as to being on water or sea, in which a site of a power plant is vulnerable to corrosion, securing of corrosion resistance of a structure supporting a solar panel is essential. In addition, there is a trend to move the sites of land-based solar power plants to environments such as an abandoned salt farm, a desert, or the like, in which power plants structures are vulnerable to corrosion.

The structure supporting a solar panel may generally be formed of a steel material, and a carbon steel wire may be also used as a material of a fastener to be used when assembling the structure. Such a steel material is exposed to various corrosive environments depending on an installation site of a solar power structure, and since corrosion resistance may be an important factor in determining durability of a solar power structure installed on coasts, water, the sea, or the like, in which corrosion easily occurs, securing of the corrosion resistance may be very important. In the solar power structure, since connection between structures may be mainly with a fastener, when the fastener corrodes to decrease structural strength of the solar power structure, dangerous situations such as collapse of the structures or the like may occur. In this manner, the fastener may be a key component playing an important role in improving a lifespan of a building, not only in the field of renewable energy, but also in the field of construction.

Meanwhile, an inorganic coating may be used as a means for securing corrosion resistance. The inorganic coating may prevent damage to the fastener due to friction by coating a surface of the fastener with an inorganic material, and may supplement the corrosion resistance of the fastener. The inorganic coating layer may generally be formed by adding metal powder particles such as aluminum, zinc, tin, or the like thereinto. Currently, it is possible to secure various levels of corrosion resistance by controlling the inorganic coating layer depending on a usage environment and a required level of corrosion resistance.

The inorganic coating may have various advantages in terms of corrosion resistance. However, in order to obtain sufficient fastening force in a structure requiring high fastening force, when excessive fastening is performed with a power tool or the like, a case in which a fastener material is damaged along with the inorganic coating layer and required corrosion resistance is thus not secured may often occur.

### Disclosure of Invention

### Technical Problem

An aspect of the present disclosure is to provide a fastener, a coated fastener, and a method for manufacturing the same that may secure sufficient corrosion resistance, without damaging a material and a coating layer, when a structure requiring high fastening force is fastened.

Problems of the present disclosure are not limited to the above-described contents. Those who have ordinary knowledge in the technical field to which the present disclosure belongs will have no difficulty in understanding an additional problem of the present disclosure from the overall contents of the present specification.

### Solution to Problem

A fastener according to an aspect of the present disclosure includes a thermal surface treatment layer formed on a surface portion, wherein the thermal surface treatment layer includes a nitride layer, wherein the nitride layer has an A value of 60% or more derived by the following Relational Expression 1: [Relational Expression 1] $A = \frac{ε}{ε + γ ′} \times 100$
(In Relational Expression 1, ε means an area fraction (%) of an epsilon phase (ε-FeₓN (2≤x≤3)) of the nitride layer, and γ' means an area fraction (%) of a gamma prime phase (γ'-Fe₄N) of the nitride layer.)

An average thickness of the above-described nitride layer may be 10 µm to 50 µm.

The above-described thermal surface treatment layer may further include an oxide layer.

An average thickness of the above-described oxide layer may be 1 µm to 5 µm.

Vickers hardness of the surface portion of the above-described fastener may be at least twice the Vickers hardness of a central portion of the above-described fastener.

A coated fastener according to another aspect of the present disclosure may further include a zinc-based layer formed on the fastener.

The above-described coated fastener may further include an aluminum-based layer formed on the zinc-based layer.

The above-described aluminum-based layer may include 1.0 wt% or more and 18 wt% or less of silicon oxide, based on a total weight of the aluminum-based layer.

An average thickness of a silicon oxide layer included in the above-described aluminum-based layer may be 1.0 mm or more and 15.0 mm or less.

The above-described coated fastener may further include a functional coating layer.

A method for manufacturing a fastener, according to another aspect of the present disclosure, includes preparing a fastener, and forming a thermal surface treatment layer for heat treating a surface of the fastener, wherein the forming a thermal surface treatment layer is a heat treatment at a temperature of 550°C to 590°C in a non-oxidizing atmosphere or a reducing atmosphere.

A fraction of ammonia (NH₃) in the non-oxidizing atmosphere or the reducing atmosphere, described above, may be 60 vol% or more and 80 vol% or less.

A method for manufacturing a coated fastener, according to an aspect of the present disclosure, may include, after the forming a thermal surface treatment layer, forming a zinc-based layer by immersing the fastener in a coating solution containing zinc; and may include, after the forming a zinc-based layer, forming an aluminum-based layer by immersing the fastener in a coating solution containing aluminum.

The above-described coating solution containing aluminum may include 1.0 wt% or more and 18 wt% or less of silicon oxide, based on a total weight of the coating solution containing aluminum.

The above-described method for manufacturing a coated fastener may further include a cleaning operation of removing impurities, before the forming a zinc-based layer.

The above-described method for manufacturing a coated fastener may further include forming a functional coating layer.

### Advantageous Effects of Invention

The present disclosure may provide a fastener in which surface hardness and corrosion resistance of a material are improved through a thermal surface treatment layer, and a method for manufacturing the same.

In addition, the present disclosure may provide a coated fastener having improved mechanical properties, such as excellent impact resistance, fatigue resistance, or the like, and high corrosion resistance by forming a zinc-aluminum inorganic coating layer, and a method for manufacturing the same.

### Brief Description of Drawings

FIG. 1 is a photograph illustrating a cross-section of a coated fastener according to an embodiment of the present disclosure.
FIG. 2 is an EBSD image photograph observed in thermal surface treatment layers of Comparative Examples 5 and 6 as well as Inventive Examples 7 to 9.
FIG. 3 shows exterior photographs of coated fasteners of Comparative Examples 3, and Inventive Examples 5 and 6.
FIG. 4 shows exterior photographs of states in which fasteners of Inventive Examples 3 and 4 as well as Reference 1 (STS304) and Reference 2 (Comparative Example 2) are fastened to a high-corrosion-resistant alloy-plated steel plate with a fastener fastening tool, and then subjected to a composite corrosion test for 300 cycles.

### Best Mode for the Invention

Hereinafter, preferred embodiments of the present disclosure will be described. However, embodiments of the present disclosure may be modified in various other forms, and the scope of the present disclosure is not limited to embodiments described below.

In the present specification, the term "including" and "including" may be used to indicate that other components may be included rather than excluding other components, unless specifically stated otherwise.

In addition, unless specifically stated otherwise in the specification of the present disclosure, % unit means wt%.

Hereinafter, preferred embodiments of the present disclosure will be described. However, embodiments of the present disclosure may be modified in various other forms, and the scope of the present disclosure is not limited to embodiments described below.

In the present specification, the term "comprising" and "including" may be used to indicate that other components may be included rather than excluding other components, unless specifically stated otherwise.

In addition, unless specifically stated otherwise in the specification of the present disclosure, the % unit means wt%.

Although not essential, it should be noted that the technical solution according to each aspect of the present disclosure may be usefully used in the technical solution according to other aspects. In addition, composition and various useful parameters according to each aspect of the present disclosure may be appropriately combined with other aspects to obtain advantageous effects.

As described above, in order to obtain sufficient fastening force in a structure requiring high fastening force, when excessive fastening is performed with a power tool or the like, making it difficult to secure corrosion resistance.

The inventors of the present disclosure have found that the surface hardness and corrosion resistance of a material may be improved through thermal surface treatment that continuously forms a nitride or a nitride and an oxide on a surface of a fastener material.

From this point of view, a fastener according to an embodiment of the present disclosure includes a thermal surface treatment layer formed on a surface portion, wherein the thermal surface treatment layer includes a nitride layer, wherein the nitride layer has an A value of 60% or more derived by the following Relational Expression 1. Each configuration may be described in detail below. [Relational Expression 1] $A = \frac{ε}{ε + γ ′} \times 100$
(In Relational Expression 1, ε means an area fraction (%) of an epsilon phase (ε-FeₓN (2≤x≤3)) of the nitride layer, and γ' means an area fraction (%) of a gamma prime phase (γ'-Fe₄N) of the nitride layer.)

A fastener according to an embodiment of the present disclosure may include a thermal surface treatment layer formed on a surface portion.

The fastener may be manufactured by cold forging base steel, and an alloy composition of the base steel is not particularly limited, but as an example, the base steel may be carbon steel for cold heading or mild steel.

Although not necessarily limited thereto, the carbon steel for cold heading may be carbon steel for cold heading having an alloy composition according to Examples 1 to 3 below.

### Example 1

Carbon steel for cold heading including, by wt%, C: 0.18 to 0.23%, Si: 0.15 to 0.35%, Mn: 0.60 to 0.90%, P: 0.03% or less, S: 0.040% or less, Cu: 0.30% or less, Ni: 0.25% or less, Cr: 0.90 to 1.20, B: 5 ppm or less, and the remainder being Fe and other unavoidable impurities.

### Example 2

Carbon steel for cold heading including, by wt%, C: 0.17 to 0.22%, Si: 0.15 to 0.35%, Mn: 0.70 to 0.90%, P: 0.03% or less, S: 0.040% or less, Cr: 0.70 to 0.90%, Ti: 0.01 to 0.05%, and the remainder being Fe and other unavoidable impurities.

### Example 3

Carbon steel for cold heading including, by wt%, C: 0.08 to 0.13%, Si: 0.10% or less, Mn: 0.30 to 0.60%, P: 0.03% or less, S: 0.035% or less, Al: 0.04% or less, and the remainder being Fe and other unavoidable impurities.

In addition, the above-described mild steel may be mild steel having an alloy composition according to the following Example 4.

### Example 4

Mild steel including, by wt%, C: 0.08 to 0.25%, Si: 0.1 to 0.6%, Mn: 0.45 to 1.0%, P: 0.04% or less, S: 0.05% or less, and the remainder being Fe and unavoidable impurities.

Since various types of carbon steel for cold heading or mild steel may be used as fastener materials in the technical field to which the present disclosure belongs, it should be noted that steel materials that may be used as base steel used in manufacturing a fastener of the present disclosure are not limited to the above-described examples.

In addition, the thermal surface treatment layer means a layer formed by heat surface treating the fastener, and may include a nitride layer.

According to an embodiment of the present disclosure, an average thickness of the nitride layer may be 10 µm to 50 µm, and in another embodiment, the average thickness of the nitride layer may be 20 µm to 30 µm. In this manner, a cross-section for measuring the average thickness of the nitride layer may be observed through an optical microscope, a scanning electron microscope, or the like.

In addition, the nitride layer may include a compound layer and a diffusion layer, and in this case, the compound layer means a layer in which an epsilon phase (ε-Fe₂₋₃N) and a gamma prime phase (γ'-Fe₄N) are mixed, and the diffusion layer may mean a layer composed of a nitride such as α"-Fe₁₆N₂ or the like, together with an epsilon phase (ε-Fe₂₋₃N) and a gamma prime phase (γ'-Fe₄N).

In particular, according to an example of the present disclosure, the nitride layer may have more of the epsilon phase (ε-FeₓN(2≤x≤3)) than the gamma prime phase (γ'-Fe₄N), and more specifically, the nitride layer may have A of 60% or more derived by the following Relational Expression 1: [Relational Expression 1] $A = \frac{ε}{ε + γ ′} \times 100$
(In Relational Expression 1, ε means an area fraction (%) of an epsilon phase (ε-FeₓN (2≤x≤3)) of the nitride layer, and γ' means an area fraction (%) of a gamma prime phase (γ'-Fe₄N) of the nitride layer.)

That is, an embodiment of the present disclosure may secure hardness of the thermal surface treatment layer to be higher than internal hardness of the base steel by setting A to 60% or more. As another example, the A may be 70% or more, and as another example, may be 80% or more. On the other hand, as the A increases, it is more advantageous for achieving the above-described purpose. Therefore, an upper limit thereof is not specifically limited, but when the gamma prime phase is not included at all, the upper limit of the A value may be 100%, so in an embodiment of the present disclosure, the upper limit of the A value may be 100%. As another example, for the purpose of controlling a pore and a whitening layer of the compound layer, the A may be 99% or less, and as another example, may be 90% or less.

That is, an embodiment of the present disclosure may suppress surface damage despite repeated physical impact by a tool when fastening the fastener by making hardness of the thermal surface treatment layer higher than hardness of an internal portion of the base steel through the A value.

More specifically, Vickers hardness of a surface portion of the fastener may be at least twice Vickers hardness of a central portion of the fastener. In this case, the Vickers hardness of the surface portion of the fastener may be an average value obtained by randomly selecting three points at a depth of 10 µm from the surface portion of the fastener at intervals of 0.1 mm, measuring micro Vickers hardness at points corresponding thereto, and the Vickers hardness of the central portion of the fastener may mean micro Vickers hardness at any one point among the points located in the central portion in the radial direction from the surface portion of the fastener. As another example, the Vickers hardness of the thermal surface treatment layer may be at least 1.5 times the Vickers hardness of the central portion of the fastener.

In addition, in addition to the nitride layer, the thermal surface treatment layer according to a non-limiting embodiment may further include an oxide layer mainly composed of magnetite (Fe₃O₄) on the nitride layer. This oxide layer may assist the thermal surface treatment layer to have higher hardness and corrosion resistance by being located on the nitride layer. In addition, as another example, the oxide layer may have an average thickness of 1 µm to 5 µm, and as another example, may have an average thickness of 2 µm to 3 µm. The average thickness of the oxide layer may be measured in the same manner as the average thickness of the nitride layer described above.

Hereinafter, a coated fastener according to an embodiment of the present disclosure will be described in detail.

That is, a fastener according to an example of the present disclosure may include an inorganic coating layer located on the fastener described above to improve corrosion resistance.

The inventors of the present disclosure also found that by forming a zinc-aluminum inorganic coating layer on a surface of a material of the fastener, a fastener having improved mechanical properties such as impact resistance, fatigue resistance, or the like, and high corrosion resistance may be provided, which may be far superior to those of existing inorganic coatings, and thus the present disclosure was derived.

More specifically, the inorganic coating layer may mean a layer coated with a resin to which an inorganic pigment has been added, and a shape of a powder particle used as the inorganic pigment may be at least one of a spherical shape or a plate shape. The plate-shaped powder particle described above may be advantageous over the spherical powder particle in that it may delay corrosion by increasing the migration path of moisture, which may be a corrosion-causing substance, and extending the time it takes for the substance to reach a fastener substrate. Therefore, although not necessarily limited thereto, the shape of the powder particle used as the inorganic pigment may be a plate shape.

Types of powder particle used as the inorganic pigment of the inorganic coating layer described above may include inorganic substances such as aluminum, zinc, silicon, tin, calcium, titanium, or the like. In particular, the coated fastener according to a non-limiting example of the present disclosure may further include a zinc-based layer formed on the fastener described above, and may further include an aluminum-based layer formed on the zinc-based layer. In this case, the terms zinc-based and aluminum-based may mean that zinc and aluminum may be added at the highest weight ratio among the inorganic pigments included in the resin.

In particular, the inorganic coating layer of the fastener according to an example of the present disclosure may control a color of the coated fastener to be brighter and strengthen bonding between the zinc-based layer and the aluminum-based layer by using the zinc-based layer as the lower layer and the aluminum-based layer as the upper layer, as described above.

In addition, a ratio of zinc and aluminum included in the inorganic coating layer may be 2 to 1, but is not necessarily limited thereto.

According to an aspect of the present disclosure, the aluminum-based layer of the coated fastener of the present disclosure may include silicon oxide in an amount of 1.0 wt% or more and 18 wt% or less, based on a total weight of the aluminum-based layer. In this manner, when the aluminum-based layer includes silicon oxide, it is possible to prevent a corrosion-causing substance from penetrating the coating layer, and to increase a movement path of the corrosion-causing substance within the coating layer. As a result, the coated fastener of the present disclosure may secure excellent corrosion resistance. In order to achieve the above-described purpose, the aluminum-based layer according to an example of the present disclosure may include silicon oxide of 1.0 wt% or more, based on a total weight of the aluminum-based layer. As another example, the aluminum-based layer may include silicon oxide of 3.0 wt% or more.

On the other hand, when an amount of silicon oxide to be added is excessively large, the resin may be gelled and viscosity may increase, which may prevent the coating from being performed smoothly, and when a solvent is added to control the viscosity and the coating may be performed, the corrosion resistance of the coated fastener may be reduced. Therefore, in an embodiment of the present disclosure, an upper limit of silicon oxide included in the aluminum-based layer may be 18 wt%. As another example, the upper limit of silicon oxide may be 10 wt% or 5 wt%.

For a similar purpose as described above, according to another aspect of the present disclosure, an average thickness of a silicon oxide layer included in the aluminum-based layer may be 1.0 mm or more and 15.0 mm or less. As another example, the average thickness of the silicon oxide layer may be 5.0 mm to 15.0 mm or 7.0 mm to 13.0 mm.

The coated fastener according to an example of the present disclosure may optionally include a zinc-plating layer between the fastener described above and the inorganic coating layer described above.

As an example according to another aspect of the present disclosure, the coated fastener of the present disclosure may further include a functional coating layer located on the inorganic coating layer. This functional coating layer may be intended to improve adhesion between coating layers when the inorganic coating layer may be composed as multiple layers, and to remove pores in the coating layer that may be generated by the addition of the inorganic pigment. In this case, it may help prevent corrosion because a path through which the corrosion-causing substance moves to the fastener may be increased. Although not necessarily limited thereto, the functional coating layer may include an epoxy-based sealing agent or an inorganic silicone resin-sealing agent containing an alkoxysilane compound as a main component.

The fastener of the present disclosure described above may effectively absorb repeated physical impacts by a tool when fastening the fastener by maintaining hardness of a surface highly through the thermal surface treatment layer, thereby suppressing surface damage.

In addition, according to an aspect of the present disclosure, the inorganic coating layer including the zinc-based layer and the aluminum-based layer may suppress contact between water, oxygen, ions, or the like, causing a corrosion reaction, and the fastener material, and further, may prevent a corrosion reaction between a positive electrode and a negative electrode in the coated fastener by increasing electrical resistance of the coated fastener. In addition, according to a non-limiting example of the present disclosure, the coated fastener of the present disclosure may suppress corrosion of the fastener by promoting passivation of the fastener material using a rust-preventive additive or the like, to be added to the inorganic coating layer, and at the same time, may secure excellent corrosion resistance of the coated fastener through selective dissolution of zinc and aluminum inorganic substances.

In addition, the aluminum-based layer described above may prevent penetration of corrosion-causing substances into the coating layer by containing silicon oxide at a certain level or higher, and may increase the migration path of corrosion-causing substances within the coating layer. As a result, the fastener of the present disclosure may secure excellent corrosion resistance.

More specifically, the coated fastener according to an example of the present disclosure may not cause red rust after 150 cycles of a composite corrosion test (CCT; cyclic corrosion test, ISO 14993). As another example, the coated fastener may not cause red rust after 200 cycles of a composite corrosion test, and as another example, may not cause red rust after 250 cycles.

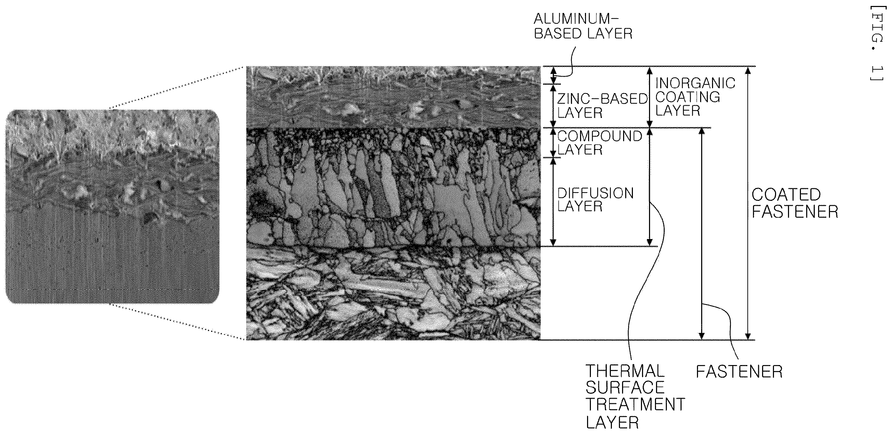

FIG. 1 is a photograph illustrating a cross-section of a coated fastener according to an embodiment of the present disclosure. Referring to FIG. 1, it can be confirmed that a coated fastener includes a fastener and an inorganic coating layer formed on the fastener, and it can be confirmed that a thermal surface treatment layer is formed on a surface portion of the fastener. In addition, it can be confirmed that the inorganic coating layer may include a zinc-based layer and an aluminum-based layer formed on the zinc-based layer.

Hereinafter, a method for manufacturing a fastener according to an embodiment of the present disclosure will be described. The following method for manufacturing a fastener is only illustrative, and it is not necessarily a case that the fastener of the present disclosure should be manufactured by this manufacturing method. In other words, it should be noted that there may be no problem in using any manufacturing method that satisfies the scope of the claims of the present disclosure to implement each embodiment of the present disclosure.

A method for manufacturing a fastener according to an aspect of the present disclosure may include preparing a fastener; and forming a thermal surface treatment layer for heat treating a surface of the fastener. Each operation will be described in detail below.

First, the method for manufacturing a fastener according to an aspect of the present disclosure may prepare a fastener. For example, such a fastener may be obtained by cold forging base iron, but since this method of manufacturing the fastener from the base iron may be common knowledge widely known to those skilled in the art, it may not be described separately in the present specification. Since an alloy composition of the base iron has been described above, it will be omitted below.

Thereafter, a surface of the fastener may be heat-treated to form a thermal surface treatment layer. When the surface of the fastener is heat-treated in this manner, the thermal surface treatment layer having high hardness compared to an internal portion of the fastener may be secured as described above. As a result, an example of the present disclosure may reduce surface damage despite repeated physical impacts by a tool when fastening the fastener.

According to an embodiment of the present disclosure, the thermal surface treatment layer may be formed by heat-treating at a temperature of 550°C or higher in a non-oxidizing atmosphere or a reducing atmosphere. This may be to form an appropriate crystal phase in the thermal surface treatment layer to improve surface hardness of the fastener, as compared to in a central portion. More specifically, the nitride layer in the thermal surface treatment layer may have an A value of 60% or more derived by the following Relational Expression 1. Since this has been described above with respect to the fastener, it will be omitted. As another example, the heat treatment may be performed at a temperature of 570°C or higher or a temperature of 580°C or higher. [Relational Expression 1] $A = \frac{ε}{ε + γ ′} \times 100$
(In Relational Expression 1, ε means an area fraction (%) of an epsilon phase (ε-FeₓN (2≤x≤3)) of the nitride layer, and γ' means an area fraction (%) of a gamma prime phase (γ'-Fe₄N) of the nitride layer.)

On the other hand, when the temperature during the heat treatment is excessively high, a structure may be cementitized, which may increase surface brittleness and increase possibility of defect occurrence. Therefore, it is preferable that the temperature during the heat treatment is 590°C or lower. As another example, an upper limit of the temperature during the heat treatment may be 585°C.

In addition, as a non-limiting example of the present disclosure, a fraction of ammonia (NH₃) in the non-oxidizing atmosphere or reducing atmosphere may be 60 vol% or more and 80 vol% or less. That is, in an example of the present disclosure, the epsilon phase may be formed at an appropriate area fraction by setting the fraction of ammonia (NH₃) to 60 vol% or more. On the other hand, when the fraction of ammonia in the atmosphere is excessively high, a problem of easily forming a brittle cementite structure may occur, Therefore, in an embodiment of the present disclosure, an upper limit of the fraction of ammonia (NH₃) may be 80 vol%. Although not necessarily limited thereto, the non-oxidizing atmosphere or reducing atmosphere may include 5 to 20 vol% of carbon dioxide, 15 vol% or less of oxygen, and the remainder nitrogen.

In this manner, after the forming a thermal surface treatment layer, the method for manufacturing a fastener according to an aspect of the present disclosure may optionally further include a zinc plating operation of performing zinc plating on the heat surface treated fastener. As described above, this may be to improve corrosion resistance through the zinc plating layer. This zinc plating operation may be performed through hot-dip zinc plating or electrolytic zinc plating.

Hereinafter, a method for manufacturing a coated fastener according to an aspect of the present disclosure will be described in detail.

First, although it may not be a mandatory operation, the method for manufacturing a coated fastener according to another aspect of the present disclosure may include a cleaning operation of removing impurities from a fastener having a thermal surface treatment layer formed, as described above.

This cleaning operation may be intended to remove impurities from the surface of the fastener and increase surface roughness before subsequent formation of an inorganic coating layer, thereby increasing adhesion of the coating layer. As a non-limiting example, the cleaning may be performed chemically or physically.

Next, the method for manufacturing a coated fastener according to an example of the present disclosure may include a zinc-based layer forming operation of forming a zinc-based layer by immersing the fastener described above in a coating solution in which zinc is added; and an aluminum-based layer forming operation of forming an aluminum-based layer by immersing the fastener in a coating solution in which aluminum is added. As a result, the inorganic coating layer including the zinc-based layer and the aluminum-based layer, described above, may be formed.

More specifically, the zinc and the aluminum may be added to the coating solution in forms of powder particles or flakes. In addition, as a non-limiting example, the coating solution may include a resin and a solvent, in addition to the zinc and the aluminum. The resin may serve to provide chemical and physical properties to the coating layer, fix zinc and aluminum powder particles, and block corrosion-causing substances. In addition, the solvent may serve to dissolve and uniformly mix substances to be added to the coating agent as a volatile liquid. In addition, substances that may be easily added by a person skilled in the art for additional functions, such as a dispersant, an anti-settling agent, a storage stabilizer, an anti-foaming agent, a rust inhibitor, or the like, may be further added to the coating solution described above.

In addition, in the zinc-based layer forming operation and the aluminum-based layer forming operation, a centrifuge may be used to appropriately control a thickness, but since a means for appropriately controlling the thickness may be easily adopted by a person skilled in the art, it is not necessarily limited thereto. According to a non-limiting embodiment of the present disclosure, a thickness of the zinc-based layer and a thickness of the aluminum-based layer may be appropriately 10 µm to 20 µm and 5 µm to 30 µm, respectively, for the purpose of improving a fastening property of the fastener and expressing sufficient corrosion resistance.

Next, a hot air gun may be used as a method for hardening the zinc-based layer and the aluminum-based layer. The above-described contents do not exclude other means that a person skilled in the art may adopt to achieve the purpose of hardening.

In addition, as described above, according to the method for manufacturing a coated fastener according to an example of the present disclosure, the coating solution to which the aluminum powder particles are added may include silicon oxide in an amount of 1.0 wt% to 18 wt%, based on a total weight thereof. Since this has also been described above, it will be omitted.

According to another aspect of the present disclosure, the method for manufacturing a coated fastener according to the present disclosure may further include a functional coating layer forming operation of forming a functional coating layer for the purpose of further improving corrosion resistance of the wire.

Hereinafter, a coated fastener and a manufacturing method thereof according to an aspect of the present disclosure will be described in more detail through specific examples. It should be noted that the examples below may be only for understanding the present disclosure and may not be intended to specify the scope of the rights of the present disclosure. The scope of the rights of the present disclosure may be determined by the matters described in the patent claims and matters reasonably inferred therefrom.

### Mode for the Invention

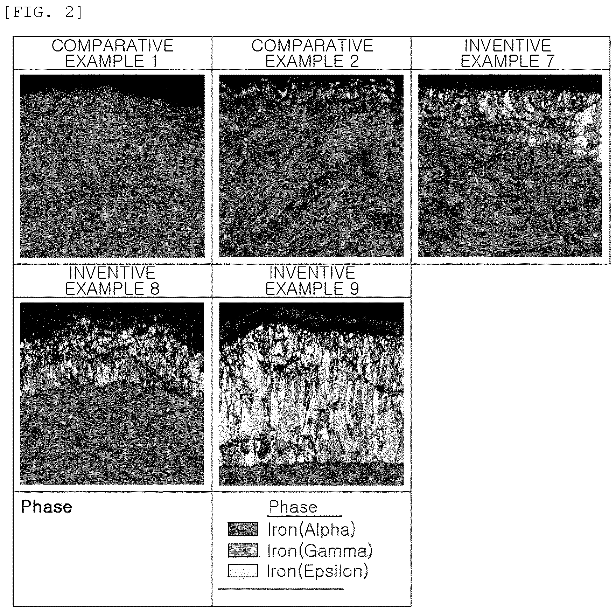

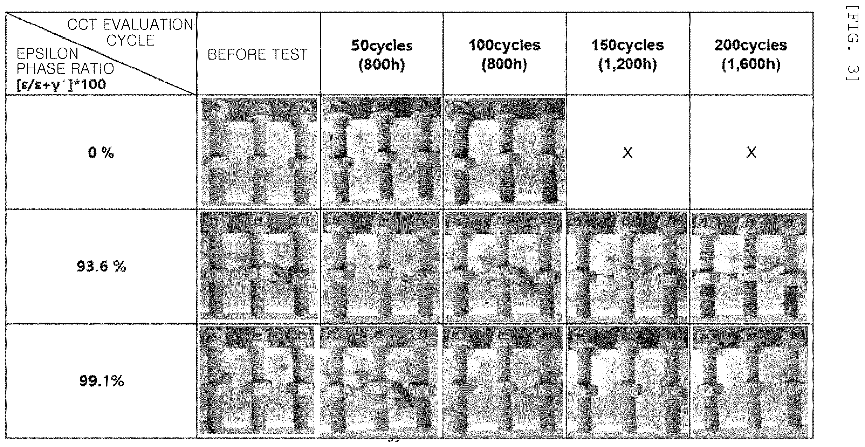

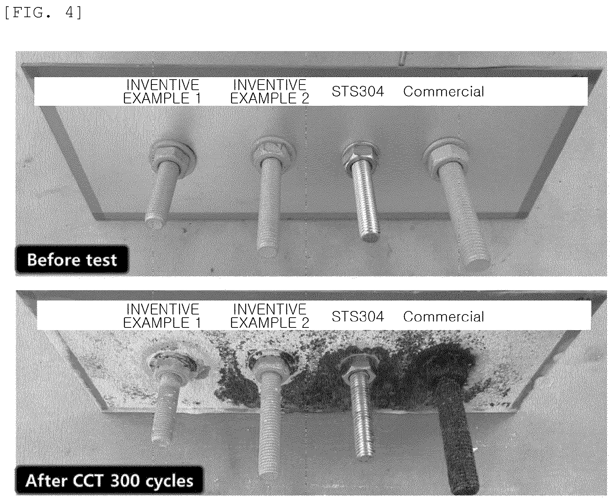

First, a fastener was manufactured using a base iron having an alloy composition of Table 1. Then, a surface of the fastener was heat-treated under conditions of Table 2 below to form a thermal surface treatment layer. In this case, an average thickness of a nitride layer in the thermal surface treatment layer may be illustrated in Table 2 below. Then, the fastener was cut through a central portion of the fastener in a radial direction, and a cross-section thus obtained was observed using EBSD. Image analysis was performed on an EBSD image thus obtained to measure an area fraction of each crystal phase in the nitride layer, which may be illustrated in Table 2 below. FIG. 2 shows EBSD image photographs observed in Comparative Examples 5 and 6 and Inventive Examples 7 to 9. Table 3 shows Vickers hardness of the thermal surface treatment layer of the fastener and Vickers hardness of the central portion, along with the above-described area fraction. Afterwards, the heat-treated fastener was chemically cleaned to remove contaminants such as oily substances or the like on the surface, and then immersed in a coating solution to which zinc was added, and then cured to form a zinc-based layer. Next, the fastener on which the zinc-based layer was formed was immersed in a coating solution in which aluminum was added, and cured to form an aluminum-based layer. In this case, 3 wt% of silicon oxide was added together to the coating solution in which aluminum was added. In the zinc-based layer and the aluminum-based layer, thicknesses thereof were adjusted to 10 µm and 5 µm, respectively, using a centrifuge, and curing was performed using a hot air gun. After curing, an average thickness of a silicon oxide layer formed on an upper portion of the aluminum-based layer was measured, and a thickness was 10 µm. To verify corrosion resistance of the obtained coated fastener, a cyclic corrosion test (CCT; ISO 14993) was performed, and results therefrom were illustrated in FIGS. 3 and 4 below.

The nitride layer and a thickness of the nitride layer may be measured by cutting the heat-treated fastener and observing a structure of the heat-treated layer using an optical microscope on the obtained cross-section. Specifically, the heat-treated fastener may be mounted to be observed from a surface in a depth direction, and after polishing, may be etched with an etching solution to observe the structure using the optical microscope. In addition, an average value of the thickness of the nitride layer may be obtained by randomly setting three points among the cross-sections, measuring the thickness of the nitride layer at each of the points, and then calculating an average value thereof.

In addition, a cross-section of an inorganic coating layer was observed using a scanning electron microscope (SEM), and the thickness of the silicon oxide layer was measured through surface analysis using an energy-dispersive X-ray spectrometer (EDS). The average thickness of the silicon oxide layer may also be obtained by, similarly to the thickness of the nitride layer, randomly setting three points at which silicon oxide was detected in the cross-section, measuring the thickness of the silicon oxide layer at each of the points, and then calculating an average value thereof.

**[Table 1]**

| | **Alloy Composition (wt%)** | | | | | | | | | | |
|---|---|---|---|---|---|---|---|---|---|---|---|
| **Steel** | **C** | **Si** | **Mn** | **P** | **S** | **Cu** | **Ni** | **Cr** | **B** | **Ti** | **Al** |
| **A** | 0.43 | 0.25 | 0.80 | 0.02 | 0.03 | - | - | - | - | - | 0.02 |
| **B** | 0.19 | 0.20 | 0.80 | 0.02 | 0.02 | - | - | 0.8 | 0.0015 | 0.02 | - |
| **C** | 0.35 | 0.20 | 0.75 | 0.025 | 0.02 | 0.2 | 0.2 | 1.05 | - | - | - |

**[Table 2]**

| | Steel | Thermal Surface Treatment | | | Average Thickness (*µ*m) of Nitride Layer | A value |
|---|---|---|---|---|---|---|
| | | Temp. (°C) | Time (min) | Gas Fraction (Vol%) NH₃: N₂: CO₂ | | |
| Comparative Example 1 | A | - | - | - | 0 | 0 |
| Comparative Example 2 | A | 520 | 300 | 0 : 100 : 0 | 5 | 55.3 |
| Inventive Example 1 | A | 550 | 300 | 50 : 40 : 10 | 15 | 62.5 |
| Inventive Example 2 | A | 580 | 300 | 60 : 30 : 10 | 23 | 79.8 |
| Inventive Example 3 | A | 550 | 300 | 70 : 20 : 10 | 30 | 93.6 |
| Inventive Example 4 | A | 580 | 300 | 70 : 20 : 10 | 25 | 99.1 |
| Comparative Example 3 | B | - | - | - | 0 | 0 |
| Comparative Example 4 | B | 520 | 300 | 0 : 100 : 0 | 5 | 55.3 |
| Inventive Example 5 | B | 550 | 300 | 70 : 20 : 10 | 30 | 93.6 |
| Inventive Example 6 | B | 580 | 300 | 70 : 20 : 10 | 25 | 99.1 |
| Comparative Example 5 | C | - | - | - | 5 | 0 |
| Comparative Example 6 | C | 550 | 300 | 0 : 100 : 0 | 15 | 55.3 |
| Inventive Example 7 | C | 580 | 300 | 50 : 40 : 10 | 23 | 62.5 |
| Inventive Example 8 | C | 550 | 300 | 60 : 30 : 10 | 30 | 79.8 |
| Inventive Example 9 | C | 580 | 300 | 70 : 20 : 10 | 25 | 93.6 |

**[Table 3]**

| | **Hardness (Hv)** | | |
|---|---|---|---|
| | **Surface** | **Core Portion (Substrate)** | **Surface/Core Portion** |
| **Comparative Example 1** | 250 | 250 | 1 |
| **Comparative Example 2** | 475 | 250 | 1.9 |
| **Inventive Example 1** | 530 | 250 | 2.1 |
| **Inventive Example 2** | 591 | 250 | 2.4 |
| **Inventive Example 3** | 612 | 250 | 2.4 |
| **Inventive Example 4** | 610 | 250 | 2.4 |
| **Comparative Example 3** | 325 | 325 | 1 |
| **Comparative Example 4** | 553 | 325 | 1.7 |
| **Inventive Example 5** | 672 | 325 | 2.1 |
| **Inventive Example 6** | 672 | 325 | 2.1 |
| **Comparative Example 5** | 320 | 320 | 1 |
| **Comparative Example 6** | 598 | 320 | 1.9 |
| **Inventive Example 7** | 635 | 320 | 2 |
| **Inventive Example 8** | 687 | 320 | 2.1 |
| **Inventive Example 9** | 746 | 320 | 2.3 |

In Tables 2 and 3, in Comparative Examples 1, 3, and 5, where surfaces of fasteners were not heat-treated and thus thermal surface treatment layers were not formed, hardness of surface portions and central portions of the fasteners were the same.

In addition, in Comparative Examples 2, 4, and 6, where although heat treatment of surfaces of fasteners were performed, detailed conditions in a heat surface treatment operation proposed in the present disclosure were not satisfied, and therefore, A values derived by Relational Expression 1 of the present disclosure were less than 60%, Vickers hardness of surface portions of the fasteners were less than twice Vickers hardness of central portions of the fasteners.

On the other hand, in Inventive Examples 1 to 9 satisfying all the conditions proposed in the present disclosure, it can be confirmed that Vickers hardness of surface portions of fasteners were more than twice Vickers hardness of central portions of the fastener. Accordingly, the present disclosure may suppress surface damage despite repeated physical impacts by a tool when fastening the fasteners by making hardness of the surface portions higher than that of the central portions.

FIG. 3 shows exterior photographs of coated fasteners of Comparative Examples 3, and Inventive Examples 5 and 6. Referring thereto, it can be confirmed that the higher the A value derived by Relational Expression 1, which may be a relational expression for a ratio of crystal phases in a nitride layer, the better corrosion resistance. That is, unlike Comparative Example 3, it can be seen that in Inventive Examples 5 and 6, almost no red rust occurred even when a composite corrosion test was performed for 150 cycles.

FIG. 4 shows exterior photographs of states in which fasteners of Inventive Examples 3 and 4 and Reference 1 (STS304) and Reference 2 (Comparative Example 2) are fastened to a high-corrosion-resistant alloy-plated steel plate with a fastener fastening tool, and then subjected to a composite corrosion test for 300 cycles. Even referring thereto, it can be confirmed that Inventive Examples 3 and 4, in which thermal surface treatment layers were formed and epsilon phase ratios of nitride layers was controlled to a certain level, have superior corrosion resistance, as compared to References 1 and 2.

## Claims

1. A fastener comprising:
a thermal surface treatment layer formed on a surface portion,
wherein the thermal surface treatment layer includes a nitride layer,
wherein the nitride layer has an A value of 60% or more derived by the following Relational Expression 1: [Relational Expression 1] $A = \frac{ε}{ε + γ ′} \times 100$
In Relational Expression 1, ε is an area fraction (%) of an epsilon phase (ε-FeₓN (2≤x≤3)) of the nitride layer, and γ' is an area fraction (%) of a gamma prime phase (γ'-Fe₄N) of the nitride layer.

2. The fastener of claim 1, wherein an average thickness of the nitride layer is 10 µm to 50 µm.

3. The fastener of claim 1, wherein the thermal surface treatment layer further includes an oxide layer.

4. The fastener of claim 3, wherein an average thickness of the oxide layer is 1 µm to 5 µm.

5. The fastener of claim 1, wherein Vickers hardness of the surface portion of the fastener is at least twice Vickers hardness of a central portion of the fastener.

6. The coated fastener of claim 1, further including a zinc-based layer formed on the fastener.

7. The coated fastener of claim 6, further including an aluminum-based layer formed on the zinc-based layer.

8. The coated fastener of claim 7, wherein the aluminum-based layer includes 1.0 wt% or more and 18 wt% or less of silicon oxide, based on a total weight of the aluminum-based layer.

9. The coated fastener of claim 8, wherein an average thickness of a silicon oxide layer included in the aluminum-based layer is 1.0 mm or more and 15.0 mm or less.

10. The coated fastener of at least one of claims 6 to 9, further including a functional coating layer.

11. A method for manufacturing a fastener, comprising:
preparing a fastener; and
forming a thermal surface treatment layer for heat treating a surface of the fastener,
wherein the forming a thermal surface treatment layer is carried out by heat treating at a temperature of 550°C to 590°C in a non-oxidizing atmosphere or a reducing atmosphere.

12. The method of claim 11, wherein a fraction of ammonia (NH₃) in the non-oxidizing atmosphere or the reducing atmosphere is 60 vol% or more and 80 vol% or less.

13. The method of claim 11, including, after the forming a thermal surface treatment layer, forming a zinc-based layer by immersing the fastener in a coating solution containing zinc.

14. The method of claim 13, including, after the forming a zinc-based layer, forming an aluminum-based layer by immersing the fastener in a coating solution containing aluminum.

15. The method of claim 14, wherein the coating solution containing aluminum includes 1.0 wt% or more and 18 wt% or less of silicon oxide, based on a total weight of the coating solution containing aluminum.

16. The method of claim 13, further including a cleaning operation of removing impurities, before the forming a zinc-based layer.

17. The method of at least one of claims 13 to 16, further including forming a functional coating layer.
